# EUROPÄISCHE PATENTSCHRIFT

(11) **EP 0 447 667 B1**
(45) Veröffentlichungstag und Bekanntmachung des Hinweises auf die Patenterteilung: **18.08.1993**
(21) Anmeldenummer: 90125209.8
(22) Anmeldetag: 21.12.1990
(51) Int. Cl.: C02F 3/12, B01J 8/22

(54) **Wirbelbettreaktoren zur Abwasserreinigung mit Vorrichtung zum Feststoffrücktransport**
Reactors for waste water purification with apparatus for recycling of solids
Réacteurs à lit fluidisé pour la purification d'eau usée avec un appareil pour le recyclage de matières solides

(30) Priorität: 22.03.1990 DE 4009180
(43) Veröffentlichungstag der Anmeldung: 25.09.1991
(73) Patentinhaber: BAYER AG, 51368 Leverkusen (DE)
(72) Erfinder: Kauling, Jörg, Dipl.-Ing., W-5000 Köln 41 (DE); Henzler, Hans-Jürgen, Dr., W-5650 Solingen (DE); Pascik, Imre, Dr., W-4019 Monheim (DE); Lamp, Georg, Dipl.-Ing., W-5090 Leverkusen 3 (DE)

(56) Entgegenhaltungen:
- EP-A- 0 112 095
- EP-A- 0 163 159
- CA-A- 1 064 170
- FR-A- 2 446 259

## Beschreibung

Die Erfindung betrifft einen Wirbelbettreaktor zur biologischen Abwasserreinigung mit Trägerpartikeln für Biokatalysatoren, bestehend aus einem längsdurchströmten Bechen mit einem Abwasserzulauf und einem Ablauf für das gereinigte Abwasser, einem System zur Zurückhaltung der Partikel im Ablauf Begasungseinheiten, sowie einer Vorrichtung zum Rücktransport der Feststoffpartikel im Abwasserbecken.

Bei der Abwasserreinigung werden zur Aktivitätserhöhung in zunehmenden Maße Trägerkörper für die Mikroorganismen verwendet. Als Reaktoren kommen Festbett- und Wirbelbettreaktoren zum Einsatz. In Festbettreaktoren werden durch einen sich natürlich einstellenden unregelmäßigen Bewuchs nur ein Teil des Reaktorraumes genutzt. Außerdem ist im Festbett die Einhaltung gleichmäßiger Verfahrensbedingungen (wie z.B. pH-Wert) nicht gegeben. Bei Konzentrationsschwankungen im Zulauf wird wegen mangelnder Durchmischung die Pufferwirkung einer submersen Biologie nicht voll genutzt.

Für die Abwasserreinigung sind daher gut durchmischte Wirbelbettreaktoren, in denen die Träger für die Mikroorganismen suspendiert sind, besser geeignet.

In DE-A 3 829 873 wird beschrieben, wie die Aufwirbelung und Durchmischung durch Begasung der Flüssigkeit erfolgt.

Bei längsdurchströmten Anlagen mit einem großen Verhältnis Länge zu Breite bzw. Höhe werden trotz relativ idealer Vermischung der Flüssigphase die Feststoffpartikel zum Auslauf des Reaktors transportiert und dort in der Nähe der Rückhaltevorrichtung konzentriert, während der größte Teil des Reaktors partikelfrei verbleibt. Da sich ein großer Teil der Mikroorganismen auf den Feststoffpartikeln befindet, würde bei dieser Betriebsweise nur ein beschränkter biologischer Abbau der Abwasserfracht erfolgen. Durch spezielle Maßnahmen muß daher dafür gesorgt werden, daß die Partikel relativ gleichmäßig auf den Reaktorinhalt verteilt sind. Für die Lösung dieses Problems wurden bisher spezielle Begasungstechniken (s. z.B. EP 0 163 159) oder der mechanische Rücktransport (DE 3 408 759) vorgeschlagen.

Bei der erwähnten Begasungstechnik wird gleichzeitig eine Reduzierung der Begasungsintensität in Längsrichtung des Abwasserbeckens in Kauf genommen. Da aber die für das Aufwirbeln der Feststoffpartikel erforderliche Begasungsintensität nicht unterschritten werden darf, ist diese Technik nur mit erhöhtem Energieaufwand anwendbar.

Bei dem mechanischen Rücktransport werden die Partikel durch einen Airlift aus dem Becken entnommen und mit einem Förderband zum Einlauf des Abwasserbeckens transportiert. Nachteilig bei dieser Methode ist der zusätzliche Aufwand an Investitions- und Energiekosten.

Der Erfindung liegt die Aufgabe zugrunde, in einem Wirbelbettreaktor, der die Bewegung der Trägerpartikel auf besonders energetisch günstige Weise ermöglicht, den Feststoffrücktransport und damit die Gleichverteilung der Partikel im Reaktor auf eine ebenfalls energetische günstige Weise zu bewerkstelligen.

Diese Aufgabe wird bei dem eingangsbeschriebenen Wirbelbettreaktor erfindungsgemäß dadurch gelöst, daß die Vorrichtung zum Partikelrücktransport aus einem längs des Reaktors 1 angeordneten Strahlsauger mit Mischrohr, einem Einlauf zum Mischrohr und einer Treibdüse besteht, dessen sich an den Einlauf anschließender Saugraum an den Filterraum mit dem Rückhaltesystem angrenzt und daß die Treibdüse des Strahlsaugers mit dem zu reinigenden Abwasserstrom (Zulauf) verbunden ist.

Vorteilhaft grenzt der Saugraum des Strahlsaugers an den Filterraum an, aus dem der Ablauf des gefilterten Abwassers erfolgt. Der Saugraum ist dabei zweckmäßig durch Leitbleche von dem übrigen Reaktorraum abgegrenzt.

Gemäß einer bevorzugten Ausführungsform ist der Durchmesser des Mischrohres kleiner als das 0,3-fache und vorteilhaft kleiner als das 0,2-fache des hydraulischen Durchmessers des Reaktorquerschnitts.

Das Rückhaltesystem für die Partikel im Reaktor besteht vorzugsweise aus Filterelementen in Form von Spaltsieben, aus einem Schräg- oder Vertikalabscheider oder einem Umlaufabscheider. Das Rückhaltesystem kann innerhalb oder außerhalb des Reaktors angeordnet sein.

Die Begasungselemente werden zweckmäßig seitlich versetzt zur Behälterachse angeordnet, so daß eine großräumige Umlaufströmung entsteht. Sie sind durch eine Vielzahl dicht nebeneinander angeordneter Gasaustrittsöffnungen charakterisiert.

Wegen des geringen Raumbedarfes des Strahlsaugers kann aber auch eine flächendeckende Begasung angewandt werden, die dann von Vorteil ist, wenn nicht das Aufwirbeln der Trägerpartikel, sondern die Sauerstoffversorgung der limitierende Vorgang ist.

Eine weitere Verbesserung ist dadurch gekennzeichnet, daß im Filterraum zusätzliche Begasungseinheiten angeordnet sind.

Mit der Erfindung werden folgende Vorteile erzielt:
- Einfacher Aufbau mit relativ geringen Investitionskosten
- Sehr günstige Energiebilanz
- Geringer Platzbedarf der Anlage, so daß grundsätzlich eine Begasung des gesamten Querschnitts möglich ist, die an keiner Stelle behindert wird
- Nachrüstung von bereits vorhandenen Becken problemlos möglich
- Betrieb der Anlage ist unabhängig vom Flüssigkeitsdurchsatz oder der Verweilzeit, da Proportionalität zwischen Saug- und Treibstrom herrscht.

Im folgenden werden verschiedene Ausführungsbeispiele der Erfindung anhand von Zeichnungen näher erläutert.

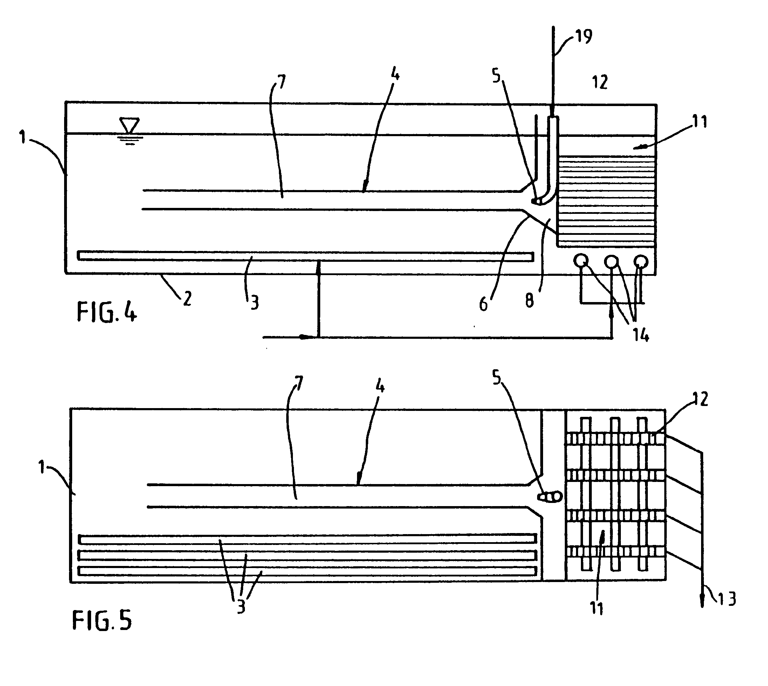

Es zeigen schematisch
- Fig. 1 und 4: Seitenansichten von Reaktoren mit Filterelementen
- Fig. 2 und 5: Draufsichten auf die Reaktoren nach Fig. 1 und 4
- Fig. 3: eine Vorderansicht des Reaktors nach Fig. 1
- Fig. 6: eine Seitenansicht eines Reaktors mit einem Lamellen- oder Schrägrohrabscheider
- Fig. 7: eine Draufsicht des Reaktors nach Fig. 6
- Fig. 8: eine Seitenansicht eines Reaktors mit einem angekoppelten Vertikalabscheider
und
- Fig. 9: eine Seitenansicht eines Reaktors mit einem angekoppelten Umlaufabscheider.

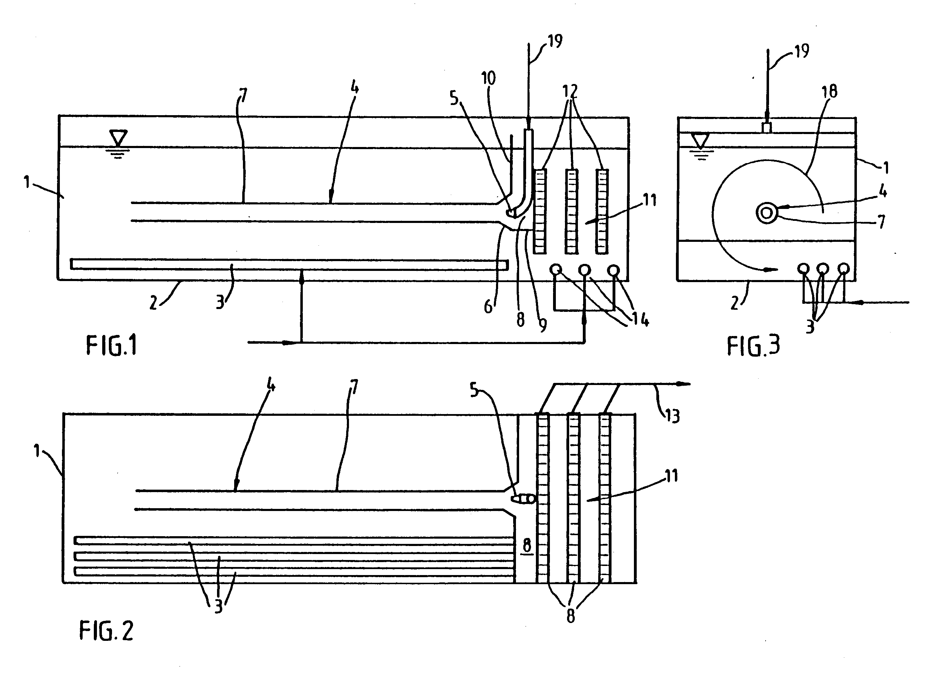

Der Reaktor gemäß Fig. 1 besteht aus einem rechteckigen Becken 1. Dicht über dem Behälterboden 2 sind in Längsrichtung zwischen Behältermitte und Seitenwand Begasungseinheiten 3 angeordnet. Dadurch wird eine die Partikel aufwirbelnde Umlaufströmung erzeugt (s. Fig. 3). In der Mitte des Beckens 1 ist ein Strahlsauger 4 angebracht, der aus einer Treibdüse 5, einem sich verjüngenden Einlauf 6 und einem Mischrohr 7 besteht. Die Treibdüse 5 wird mit dem zu reinigenden Abwasserstrom 19 gespeist. Der an den Einlauf 6 anschließende Saugraum 8 des Strahlsaugers ist gegenüber dem übrigen Reaktorvolumen durch Leitbleche 9, 10 abgegrenzt und schließt sich unmittelbar an den Filterraum 11 am Reaktor an. Im Filterraum 11 befindet sich das Rückhaltesystem für die Trägerpartikel, das gemäß Fig. 1-3 aus Filterelementen 12 in Form von Spaltsieben besteht. Das filtrierte Abwasser wird durch den Ablauf 13 abgeführt. In der Nähe des Abwasserablaufs 13 stellt sich stets eine etwas höhere Feststoffkonzentration ein als im übrigen Teil des Abwasserbeckens. Dieser Konzentrationsunterschied verringert sich mit zunehmendem Verhältnis von Saug- zu Treibstrom des Strahlsaugers 4. Durch den Einbau der Leitbleche 9 und 10, die eine direkte Verbindung des Saugraumes 8 mit dem Reaktorraum geringerer Partikelkonzentration verhindern, kann diese Konzentrationsdifferenz bei einem gegebenen Verhältnis von Saugstrom zu Treibstrom klein gehalten werden.

Als weitere wichtige Bedingung für einen störungsfreien Betrieb der Vorrichtung darf die Geschwindigkeit im Mischrohr des Strahlsaugers die Ablagerungsgeschwindigkeit der Feststoffpartikel nicht unterschreiten. Diese Bedingung kann in der Regel erfüllt werden, wenn der Durchmesser des Mischrohres kleiner als das 0,2-fache des hydraulischen Durchmessers des Reaktorquerschnittes ist, wobei unter dem hydraulischen Durchmesser das Verhältnis der vierfachen Querschnittsfläche zum Umfang des Strömungskanals zu verstehen ist. Bei dieser Dimensionierung ist auch gewährleistet, daß die zum Aufwirbeln der Feststoffpartikel erforderliche großräumige Umwälzströmung der Flüssigkeit nicht gestört wird.

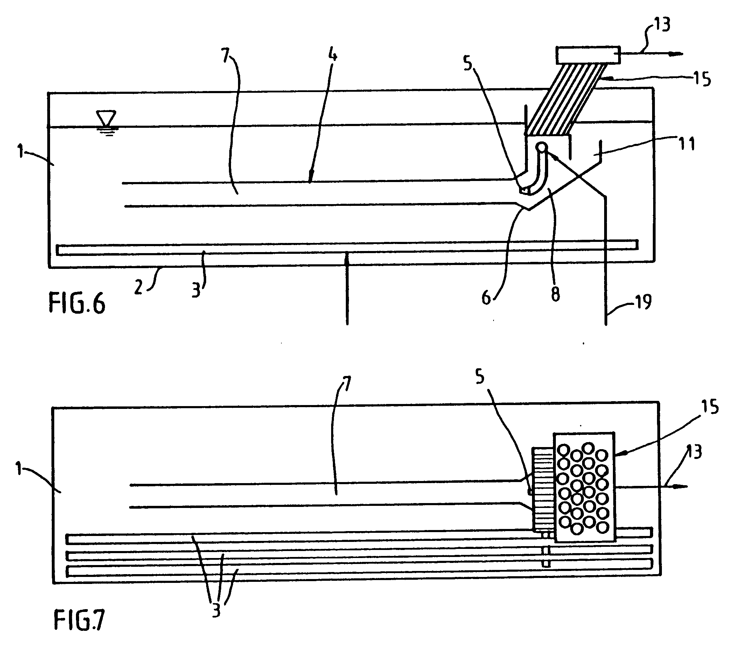

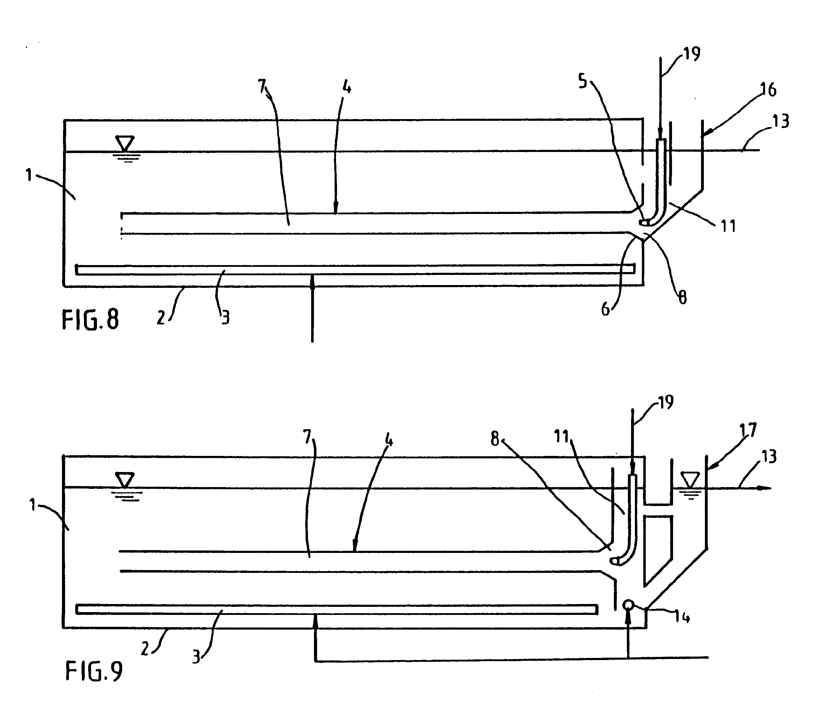

Im Filterraum 11 sind unterhalb der Filterelemente 12 zusätzliche Begasungeinheiten 14 vorgesehen. An Stelle von Filterelementen kann gemäß Fig. 6 und 7 auch ein Lamellen- oder Schrägrohrabscheider 15 eingesetzt werden. Weitere Varianten für das Rückhaltesystem sind in den Fig. 8 und 9 dargestellt. Gemäß Fig. 8 besteht das Rückhaltesystem aus einem seitlich angekoppelten Vertikalabscheider 16 und gemäß Fig. 9 aus einem seitlich angekoppelten Umlaufabscheider 17. Die Zusatz-Begasungseinheiten 14 sind in diesem Fall unterhalb und unmittelbar vor dem Umlaufabscheider 17 angebracht.

In Fällen, bei denen ein erhöhter Sauerstoffeintrag wünschenswert ist, können die Begasungseinheiten 3 auch flächendeckend über den gesamten Beckenboden verteilt angeordnet werden, so daß eine gleichmäßige Begasung des gesamten Reaktorquerschnitts erfolgt.

Der Strahlsauger 4 muß nicht notwendigerweise in der Mitte des Beckens 1 angeordnet sein. Er kann auch seitlich versetzt oder außerhalb des Beckens 1 untergebracht werden, wobei entsprechende Zu- und Ableitungen ins Becken 1 vorgesehen werden müssen.

### Ausführungsbeispiel

Das rechteckige Reaktorbecken 1 hat 40 m Seitenlänge, 6 m Breite und wird mit einer Füllstandshöhe von 4 m betrieben.

Der Durchmesser der Treibdüse 5 beträgt 29 cm, der des Mischrohres 7 63 cm, die Gesamtlänge des Strahlsaugers 4 30 m. Der Filterraum 11 erstreckt sich über 3 m des hinteren Beckenabschnitts.

Die aus den Begasungseinheiten 3 in das Abwasser austretenden Gasblasen erzeugen eine großräumige Umlaufströmung 18 (s. Fig 3), die die Trägerpartikel aufwirbelt. An den Filterelementen 12 wird eine analoge Aufwirbelung und dadurch bedingt auch eine Abreinigung der Filter durch die zusätzlichen Begasungseinheiten 14 erreicht.

Im Wirbelbettreaktor (Becken 1) befinden sich im Mittel 10 Vol-% mit Kohle beschichtete Polyurethanschaumpartikel (Trägerkörper), die mit Mikroorganismen zur Abwasserreinigung bewachsen sind. Die mittlere Größe dieser Partikel beträgt 13 mm, ihre Dichte im gewässerten Zustand 1.025 kg/m³. Durch eine Gasmenge von nur 1.320 m³/h, was einer spezifischen Leistung von etwa 13 W/m³ entspricht, werden die als Biokatalysator wirkenden Trägerpartikel im suspendierten Zustand gehalten.

Der in den Strahlsauger 4 eingespeiste Abwasserstrom 19 von 685 m³/h, der den Reaktor über die Filterelemente 12 bzw. die Abscheider 15, 16 oder 17 wieder verläßt, saugt infolge des Impulsaustausches im Mischrohr 7 des Strahlsaugers 4 einen etwa gleich großen Feststoff beladenen Flüssigkeitsstrom aus dem Saugraum über den Filterelementen 12 bzw. vor den Sedimentationsabscheidern ab. Dadurch werden ständig Feststoffpartikel aus dem Filterraum 11, in dem eine Partikelkonzentration von etwa 18,6 Vol-% vorliegt, durch den Strahlsauger 4 zum Anfang des Beckens 1 transportiert. Die Feststoffkonzentration am Ende des Mischrohres 7 von etwa 9,3 Vol-%, die sich bei der genannten Saugleistung des Strahlsaugers 4 und der genannten Größe des Filterraumes 11 ergibt, liegt praktisch im ganzen übrigen Volumen des Abwasserbeckens vor. Für den Betrieb dieser Vorrichtung wird dabei ein Leistungseintrag von lediglich 0,83 W/m³ Beckenvolumen benötigt, was nur etwa 5 % der Gesamtleistung für den Betrieb der Anlage ausmacht.

## Patentansprüche

1. Wirbelbettreaktor zur biologischen Abwasserreinigung mit Trägerpartikeln für Biokatalysatoren, bestehend aus einem längsdurchströmten Becken (1) mit einem Abwasserzulauf (19) und einem Ablauf (13) für das gereinigte Abwasser, einem System (12) zur Zurückhaltung der Partikel im Ablauf (13), Begasungseinheiten (3) sowie einer Vorrichtung zum Rücktransport der in der Nähe des Rückhaltesystems (12) konzentrierten Partikel, dadurch gekennzeichnet, daß die Vorrichtung zum Partikelrücktransport aus einem Strahlsauger (4) mit einem Mischrohr (7), einem Einlauf (6) zum Mischrohr (7) und einer Treibdüse (5) besteht, der in Längsrichtung des Beckens (1) angeordnet ist und dessen sich an den Einlauf (6) anschließender Saugraum (8) an den Filterraum (11) mit dem Rückhaltesystem (12) angrenzt und daß die Treibdüse (5) des Strahlsaugers (4) mit dem zu reinigenden Abwasserstrom (19) (Zulauf) verbunden ist.

2. Wirbelbettreaktor nach Anspruch 2, dadurch gekennzeichnet, daß der Saugraum (8) durch Leitbleche (9, 10) vom Reaktorraum abgegrenzt ist.

3. Wirbelbettreaktor nach Anspruch 1 bis 3, dadurch gekennzeichnet, daß der Durchmesser des Mischrohres (7) kleiner als das 0,3-fache, vorzugsweise kleiner als das 0,2-fache des hydraulischen Durchmessers des Reaktorquerschnitts ist.

4. Wirbelbettreaktor nach Anspruch 1 bis 4, dadurch gekennzeichnet, daß als Rückhaltesystem Filterelemente (12) aus Spaltsieben oder ein Schrägkanalabscheider (15) oder ein Umlaufabscheider (17) innerhalb oder außerhalb des Abwasserbeckens (1) angeordnet sind.

5. Wirbelbettreaktor nach Anspruch 1 bis 5, dadurch gekennzeichnet, daß in Längsrichtung seitlich versetzt zur Behälterachse Begasungseinheiten (3) angeordnet sind, so daß eine großräumige Umlaufströmung (18) entsteht.

6. Wirbelbettreaktor nach Anspruch 1 bis 5, dadurch gekennzeichnet, daß bis auf die Fläche unterhalb des Mischrohres (7) Begasungseinheiten (3) flächendeckend installiert sind, die eine gleichmäßige Begasung des Reaktorquerschnittes und damit einen erhöhten Sauerstoffeintrag gewährleisten.

7. Wirbelbettreaktor nach Anspruch 1 bis 7, dadurch gekennzeichnet, daß die Begasungseinheiten (3) eine Vielzahl dicht nebeneinander angeordneter Gasaustrittsöffnungen aufweisen.

8. Wirbelbettreaktor nach Anspruch 1 bis 8, dadurch gekennzeichnet, daß im Filterraum (11) oder vor dem Umlaufabscheider (17) zusätzliche Begasungseinheiten (14) angeordnet sind.

## Claims

1. Fluidised bed reactor for the biological cleaning of effluent having carrier particles for biocatalysts, consisting of a basin (1) with longitudinal flow having an effluent feed (19) and a run-off (13) for the cleaned effluent, of a system (12) for the retention of particles in the run-off (13), gas-bubbling units (3), and a device for conveying back the particles concentrated in the vicinity of the retention system (12), characterised in that the device for conveying back the particles consists of a jet strainer (4), which has a mixing tube (7), an inlet (6) to the mixing tube (7) and a propelling nozzle (5) and which is disposed in the longitudinal direction of the basin (1), and whose suction chamber (8) adjoining the inlet (6) borders on the filter chamber (11) with the retention system (12), and in that the propelling nozzle (5) of the jet strainer (4) is connected to the effluent stream (19) (feed) to be cleaned.

2. Fluidised bed reactor according to claim 1, characterised in that the suction chamber (8) is separated from the reactor chamber by baffle plates (9, 10).

3. Fluidised bed reactor according to claim 1 to 2, characterised in that the diameter of the mixing tube (7) is smaller than 0.3 times, preferably smaller than 0.2 times the hydraulic diameter of the reactor cross-section.

4. Fluidised bed reactor according to claim 1 to 3, characterised in that as a retention system, filter elements (12) consisting of bar screens or an oblique channel separator (15) or a rotary separator (17) are disposed inside or outside the effluent basin (1).

5. Fluidised bed reactor according to claim 1 to 4, characterised in that fumigation units (3) are disposed in the longitudinal direction, laterally offset relative to the vessel axis, so that large-volume circulation (18) is produced.

6. Fluidised bed reactor according to claim 1 to 5, characterised in that surface-covering fumigation units (3) are installed extending as far as the surface below the mixing tube (7) and ensure uniform fumigation of the reactor cross-section, and hence an increased oxygen intake.

7. Fluidised bed reactor according to claim 1 to 6, characterised in that the fumigation units (3) have a plurality of gas outlet apertures arranged closely adjacent to one another.

8. Fluidised bed reactor according to claim 1 to 7, characterised in that additional fumigation units (14) are disposed in the filter chamber (11) or in front of the rotary separator (17).

## Revendications

1. Réacteur à lit fluidisé pour la purification biologique des eaux résiduaires avec particules porteuses pour catalyseurs biologiques constitué d'un bassin (1) à parcours longitudinal avec une adduction d'eaux résiduaires (19) et une évacuation (13) pour les eaux résiduaires purifiées, un système (12) pour la rétention des particules dans l'évacuation (13), des unités d'aération (3) ainsi qu'un dispositif pour le transport en retour des particules concentrées à proximité du système de rétention (12), caractérisé en ce que le dispositif pour le transport en retour des particules est constitué d'un aspirateur à jet (4) avec un tube mélangeur (7), une entrée (6) vers le tube mélangeur (7) et une tuyère d'entraînement (5) qui est disposée dans la direction longitudinale du bassin (1) et dont la zone d'aspiration (8) se raccordant à l'entrée (6) avoisine la zone de filtration (11) avec le système de rétention (12) et en ce que la tuyère d'entraînement (5) de l'aspirateur à jet (4) est connectée aux eaux résiduaires à purifier (19) (adduction).

2. Réacteur à lit fluidisé selon la revendication 2, caractérisé en ce que la zone d'aspiration (8) est séparée du volume du réacteur par des tôles de guidage (9,10)

3. Réacteur à lit fluidisé selon les revendications 1 à 3, caractérisé en ce que le diamètre du tube mélangeur (7) est inférieur à 0,3 x et de préférence est inférieur à 0,2 x le diamètre hydraulique de la section du réacteur.

4. Réacteur à lit fluidisé selon les revendications 1 à 4, caractérisé en ce que les éléments filtrants (12), formés de tamis à fentes ou d'un séparateur à canal oblique (15) ou d'un séparateur à recirculation (17), sont disposés pour servir le système de rétention à l'intérieur ou à l'extérieur du bassin à eaux résiduaires (1).

5. Réacteur à lit fluidisé selon les revendications 1 à 5, caractérisé en ce que les unités d'aération (3) sont disposées dans la direction longitudinale avec décalage latéral par rapport à l'axe de la cuve, si bien qu'un courant de recirculation (18) agissant dans un grand volume est créé de cette manière.

6. Réacteur à lit fluidisé selon les revendications 1 à 5, caractérisé en ce que des unités d'aération (3) sont installées pour recouvrir toute la surface située en-dessous du tube mélangeur (7), ces unités assurant une aération uniforme de la section du réacteur et donc une adduction d'oxygène augmentée.

7. Réacteur à lit fluidisé selon les revendications 1 à 7, caractérisé en ce que les unités d'aération (3) présentent un grand nombre d'orifices de sortie d'air disposés très près les des autres.

8. Réacteur à lit fluidisé selon les revendications 1 à 8, caractérisé en ce que les unités d'aération supplémentaires (14) sont disposées dans la zone de filtration (11) ou devant le séparateur à recirculation (17).
